# EUROPÄISCHE PATENTANMELDUNG

(11) **EP 0 897 083 A2**
(43) Veröffentlichungstag der Anmeldung: **17.02.1999**
(21) Anmeldenummer: 98114812.5
(22) Anmeldetag: 06.08.1998
(51) Int. Cl.: F16L 55/027, F16L 55/033

(54) **Ultraschalldämpfer**

(30) Priorität: 14.08.1997 DE 19735365; 25.09.1997 DE 19742343
(71) Anmelder: Müller-BBM GmbH, D-82152 Planegg (DE)
(72) Erfinder: Stüber, Burkhard Dr.-Ing., 82110 Germering (DE)
(74) Vertreter: Reinhard - Skuhra - Weise & Partner

(57) **Zusammenfassung**

Zur wirksamen Ultraschalldämpfung für Ultraschallgaszähler wird eine Vorrichtung zum Einbau in eine von einem gasförmigen Medium durchströmte Rohrleitung verfügbar gemacht, die aus einem in die Leitung einsetzbaren Gehäuse 11 mit einem Strömungs-einlaß 12 und einem Strömungsauslaß 13 besteht, wobei in dem Gehäuse 11 parallel zueinander stirnseitig angeströmte Lochbleche 14 angeordnet sind, deren Dicke ≤ 8 mm beträgt, wobei der Durchmesser der Löcher 15 ≤ 10 mm ist und bei denen der Abstand a der Lochbleche 14 ≤ 10 mm beträgt.

## Beschreibung

Die Erfindung betrifft eine Vorrichtung zur Ultraschalldämpfung für eine von einem gasförmigen Medium durchströmte Rohrleitung.

Für die Messung des Durchflusses eines gasförmigen Mediums, wie beispielsweise Erdgas, in Rohrleitungen werden zunehmend Ultraschallgaszähler eingesetzt. Diese Ultraschallzähler nutzen die Tatsache, daß sich die Ultraschallimpulse, die in einem Bereich von ca. 60 - 200 kHz arbeiten, stromabwärts schneller und stromaufwärts langsamer ausbreiten. Bei diesen Frequenzen sind die Schallwellenlängen kleiner als 6 mm.

Ein Problem bei dem Einsatz eines Ultraschallgaszählers besteht darin, daß der Nutzschall durch Störschall verdeckt wird. Verantwortlich für das Auftreten von Störschall sind dabei Störquellen wie Armaturen, Verdichter bzw. Gebläse, die Schall in einem vom Gaszähler genutzten Frequenzbereich liefern. Demgemäß besteht für einen störungsfreien Betrieb eines Ultraschallgaszählers in einer Rohrleitung das Bedürfnis, daß vor und nach dem Ultraschallgaszähler ein Ultraschalldämpfer eingebaut wird, der Schallwellen mit Wellenlängen von weniger als 6 mm dämpft. Gleichzeitig muß wegen der kleinen Schallwellenlängen auch beachtet werden, daß eine wesentliche Vorraussetzung für die Funktionsfähigkeit des Ultraschalldämpfers selbst eine Vermeidung der Verschmutzung ist.

Bekannt ist es aus anderen Frequenzbereichen, schallabsorbierende Umlenkungen in Form eines absorbierend ausgekleideten Rohrkrümmers vorzusehen. Als nachteilig hat sich bei Anwendung im Ultraschallbereich jedoch herausgestellt, daß hier eine große Verschmutzungsgefahr besteht. Außerdem erfordert eine derartige Schalldämpfungsmaßnahme größere Baulängen, die zu aufwendigen Lösungen führen.

Der Erfindung liegt die Aufgabe zugrunde, eine wirkungsvolle Vorrichtung zur Ultraschalldämpfung für eine von einem gasförmigen Medium durchströmte Rohrleitung verfügbar zu machen, die bei einem einfachen kompakten Aufbau eine geringe Verschmutzungsneigung zeigt.

Erfindungsgemäß wird diese Aufgabe durch die in Anspruch 1 genannten Merkmale gelöst. Bevorzugte Merkmale, die die Erfindung vorteilhaft weiterbilden, sind den nachgeordneten Ansprüchen zu entnehmen.

In vorteilhafter Weise macht demgemäß die Erfindung eine Vorrichtung zur Ultraschalldämpfung verfügbar, bei der bei kleiner Baulänge nicht nur die Verschmutzungsgefahr gering ist, sondern auch der Druckverlust durch den Schalldämpfer klein gehalten werden kann. Die erfindungsgemäße Vorrichtung erlaubt große Schallpegelsenkungen.

Zu der Verschmutzungsunempfindlichkeit trägt die Ausrichtung der einzelnen Lochbleche parallel zueinander in Strömungsrichtung bei. Die Vorrichtung läßt sich außerordentlich kompakt mit einem rohrförmigen Gehäuse gestalten, das auch nachträglich in eine bestehende Rohrleitung entweder direkt oder über zugeordnete Flansche eingebaut werden kann. Die Vorrichtung selbst besteht bevorzugt aus korrosionsbeständigen Spezialstählen.

Die Dicke des Lochblechs ist in dem Bereich zwischen 60 bis 200 kHz relativ unkritisch und liegt etwa zwischen 0,5 und 8 mm, vorzugsweise etwa zwischen 1 und 4 mm.

Die Lochbleche weisen vorzugsweise ein gleichmäßiges Lochmuster mit konstanten Lochdurchmessern auf, die ≤ 10 mm, vorzugsweise ≤ 6 mm betragen, wobei zu beachten ist, daß bei kleineren Lochdurchmessern eine Verschmutzung nicht ausgeschlossen werden kann.

Hinsichtlich der Größe des Abstandes zwischen benachbarten Lochblechen ist davon auszugehen, daß dieser Abstand eine Funktion des Abstandes von dem zugeordneten Ultraschallgaszähler zum einen und der Schallquellenkonfiguration und der Schallwellenlänge zum anderen ist. Der Abstand benachbarter Lochbleche sollte nicht mehr als die doppelte Schallwellenlänge des Ultraschallzählers betragen, beispielsweise bei einer Frequenz von 100 kHz etwa 8 mm.

Die Länge des rohrförmigen Gehäuses beträgt ca. 200 mm, um eine Einfügungsdämpfung von 20 dB zu erreichen. Selbstverständlich sind auch kürzere und längere Gestaltungen möglich, ebenso wie auch die Kopplung mehrerer nacheinander angeordneter Vorrichtungen, wobei dann jedoch die Orientierung der Lochbleche der einen Vorrichtung senkrecht zu der Orientierung der Lochbleche der anderen Vorrichtung vorgesehen sein sollte.

Hinsichtlich des Durchmessers des rohrförmigen Gehäuses sind bevorzugt etwa Größen von 100 bis 1000 mm vorgesehen, je nach Einsatzbereich, wie beispielsweise bei Erdgasleitungen und allen Arten von gasdurchströmten Rohrleitungen.

Hinsichtlich der räumlichen Orientierung der Lochbleche ist weiterhin günstig, wenn diese senkrecht in dem Gehäuse angeordnet sind, weil damit auch eine weitere Reduzierung der Verschmutzungsgefahr einhergeht.

Mit dem erfindungsgemäßen Konzept, bei dem eine Absorption durch eine Kombination von Strömungsdämpfung und λ/4-Resonator verfügbar gemacht wird, läßt sich eine kurzbauende und damit kompakte Vorrichtung schaffen, bei der wirksam und zuverlässig das Entstehen neuer Schallwellen in der Vorrichtung selbst an den Lochblechen vorteilhaft dadurch vermieden wird, daß die Lochbleche nur stirnseitig angeströmt und nicht über ihre Lochfläche durchströmt werden. Vorteilhaft wird dadurch auch erreicht, daß über der Ultraschalldämpfungsvorrichtung nur ein geringer Druckverlust entsteht.

Nachfolgend wird die Erfindung mit Hinweisen auf die beigefügten Zeichnungen näher erläutert. Es zeigen:
- Fig. 1: eine stirnseitige Draufsicht auf ein Ausführungsbeispiel einer Vorrichtung zur Ultraschalldämpfung;
- Fig. 2: einen Schnitt entlang der Schnittlinie II - II in Fig. 1, und
- Fig. 3: eine Figur 1 entsprechende im Schnitt gehaltene Aufsicht auf eine weitere Ausführungsform der erfindungsgemäßen Vorrichtung.

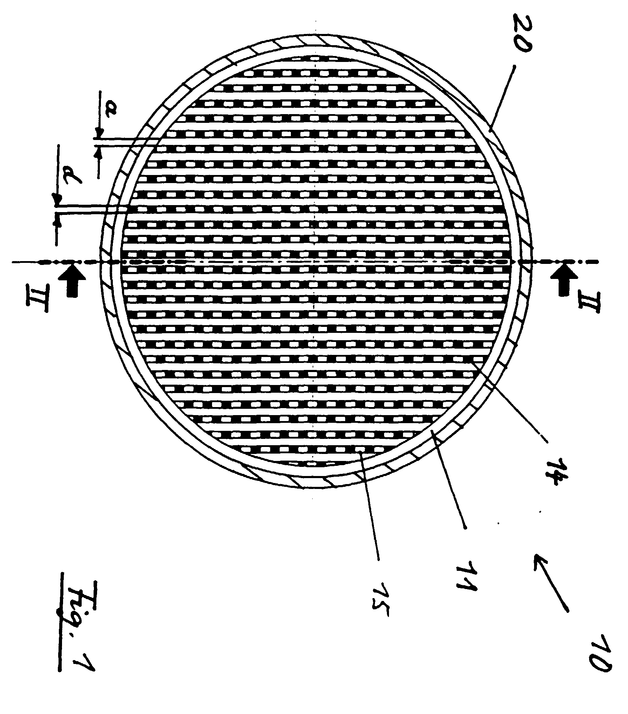

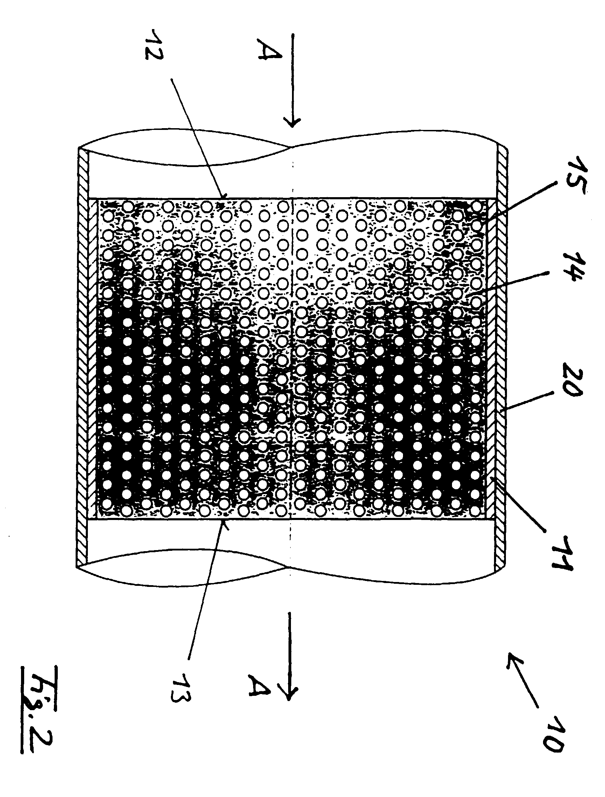

In Figur 1 ist eine Vorrichtung 10 zur Ultraschalldämpfung dargestellt, die ein Hohlzylindergehäuse 11 aufweist, das in einem Ausführungsbeispiel einen Durchmesser von ca. 200 mm und gemäß Figur 2 eine Länge von ca. 150 mm aufweist. Das Gehäuse 11 besitzt einen Strömungseinlaß 12 und einen Strömungsauslaß 13. In Figur 2 ist die Strömungsrichtung durch die Pfeile A angegeben.

In dem Gehäuse 11 sind parallel zueinander zahlreiche Lochplatten bzw. Lochbleche 14 angeordnet, die sich parallel zueinander zwischen dem Bereich des Strömungseinlasses 12 und dem Bereich des Strömungsauslasses 13 erstrecken. Bei dem dargestellten Ausführungsbeispiel schließen sie bündig mit dem Gehäuse 11 an der Ein- und Auslaßseite ab.

Die Lochbleche 14 sind senkrecht in dem Gehäuse 11 angeordnet und besitzen ein gleichförmiges Lochmuster aus Löchern 15 mit konstanten Lochdurchmessern, die bei dem dargestellten Ausführungsbeispiel weniger als 6 mm betragen.

Die Dicke d der Lochbleche 14 beträgt im dargestellten Ausführungsbeispiel etwa 3 mm.

Die Größe des Abstandes a zwischen benachbarten Lochblechen 14 beträgt etwa 4 mm.

Die Vorrichtung besteht aus einem korrosionsfesten Stahl. Die Lochbleche 14 sind in das hohlzylindrische Gehäuse 11 eingeschweißt, und das Gehäuse 11 wird entweder in eine vorhandene Leitung 20 eingesetzt und darin befestigt oder über nichtdargestellte seitliche Flansche, ggf. in einem erweiterten Rohrabschnitt zur Vermeidung eines zu großen Druckverlustes, eingebaut.

Die erfindungsgemäße Vorrichtung 10 zur Ultraschalldämpfung besteht gemäß Figur 1 und 2 aus einer Anordnung von Lochscheiben 14, die parallel zueinander angeordnet sind. Die Durchströmung der Vorrichtung erfolgt parallel zu den Lochscheiben 14. Bei dieser Art von Vorrichtung können ab einer bestimmten Strömungsgeschwindigkeit tonale Geräuschanteile im Hörbereich entstehen und damit zu einer unerwünschten Lärmbelästigung führen. Die Wirksamkeit der Vorrichtung zur Ultraschalldämpfung (Pegelsenkung im Ultraschallbereich) ist hierdürch jedoch nicht beeinträchtigt.

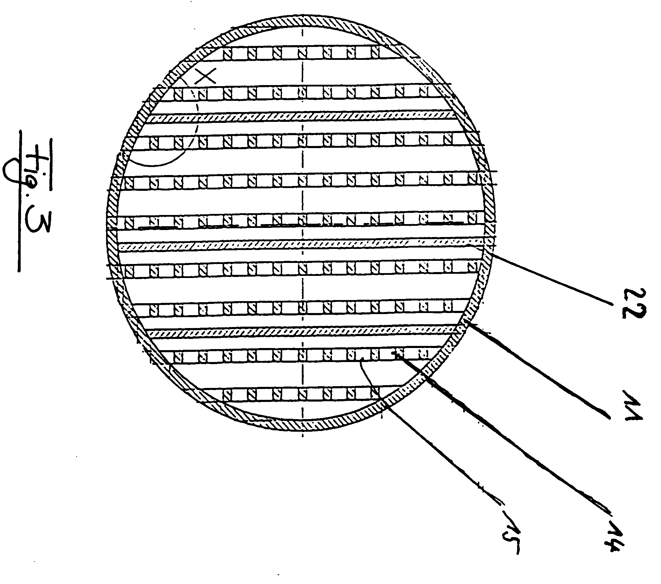

Unter Bezugnahme auf Figur 3 wird eine abgewandelte Ausführungsform der erfindungsgemäßen Vorrichtung beschrieben. Die erfindungsgemäße Vorrichtung gemäß Figur 3 weist, wie in Verbindung mit Figur 1 beschrieben, parallel zueinander angeordnete Lochplatten bzw. Lochbleche 14 auf. Zusätzlich zu der Ausführungsform nach Figur 1 sind zu den Lochscheiben 14 ungelochte Scheiben 22 eingesetzt, die in das hohlzylindrische Gehäuse 11 integriert sind. Wie sich aus Figur 3 ergibt, sind bei der dort dargestellten Ausführungsform vorzugsweise nach zwei oder drei Lochscheiben 14 jeweils eine ungelochte Scheibe 22 vorgesehen, worauf wieder zwei oder drei Lochscheiben 14 folgen. Die Löcher der Lochbleche 14 sind in Figur 3 entsprechend Figur 1 mit 15 bezeichnet.
Sämtliche Scheiben 14, 22 liegen parallel zueinander und parallel zur Achse des Gehäuses 11. Bei der in Figur 3 gezeigten Ausführungsform sind, von links ausgehend zuerst zwei Lochscheiben, dann eine ungelochte Scheibe 22, schließlich drei Lochscheiben 14, wieder eine ungelochte Scheibe 22, daraufhin zwei Lochscheiben 141 eine ungelochte Scheibe 22 und wieder zwei Lochscheiben 14 angeordnet. Im Bedarfsfall läßt sich die Struktur, d. h. der Einsatz der ungelochten Scheiben 22 entsprechend variieren. Die Lochbleche und die ungelochten Bleche (14, 22) sind wie bei der Ausführungsform nach Figur 1 und 2 gegenüber dem Gehäuse 11 befestigt.

Mit der in Figur 3 gezeigten Vorrichtung lassen sich gegenüber der Vorrichtung nach Figur 1 und 2 tonale Geräuschanteile im Hörbereich vermeiden.

## Patentansprüche

1. Vorrichtung zur Ultraschalldämpfung für eine von einem gasförmigen Medium durchströmte Rohrleitung, bestehend aus einem in die Leitung einsetzbaren Gehäuse (11) mit einem Strömungseinlaß (12) und einem Strömungsauslaß (13), in dem Löcher (15) aufweisende plattenförmige Elemente (14) angeordnet sind, die sich parallel zueinander zwischen dem Bereich des Strömungseinlasses (12) und dem Bereich des Strömungsauslasses (13) erstrecken.

2. Vorrichtung nach Anspruch 1,
dadurch gekennzeichnet,
daß die plattenförmigen Elemente (14) als Lochbleche ausgebildet sind.

3. Vorrichtung nach Anspruch 2,
dadurch gekennzeichnet,
daß die parallelen Lochbleche (14) mit konstanten Abstand (a) zwischen benachbarten Lochblechen angeordnet sind.

4. Vorrichtung nach Anspruch 2 oder 3,
dadurch gekennzeichnet,
daß die Lochbleche senkrecht in dem Gehäuse (11) angeordnet sind.

5. Vorrichtung nach einem der Ansprüche 2 bis 4,
dadurch gekennzeichnet,
daß die Dicke (d) der Lochbleche (14) etwa 0,5 bis 8 mm, vorzugsweise etwa 1 bis 4 mm, beträgt.

6. Vorrichtung nach einem der Ansprüche 2 bis 5,
dadurch gekennzeichnet,
daß die Lochbleche (14) Lochmuster mit konstanten Lochdurchmessern aufweisen, welche ≤ 10 mm, vorzugsweise ≤ 6 mm betragen.

7. Vorrichtung nach einem der Ansprüche 2 bis 6,
dadurch gekennzeichnet,
daß die Größe des Abstandes (a) zwischen benachbarten Lochblechen (14) maximal der doppelten Wellenlänge eines durch die Vorrichtung zu schützenden Ultraschallzählers entspricht bzw. auf die Schallquellenkonfiguration einschließlich Schallwellenlänge abgestimmt ist, und vorzugsweise ≤ 10 mm beträgt.

8. Vorrichtung nach einem der vorangehenden Ansprüche,
dadurch gekennzeichnet,
daß das Gehäuse (11) rohrförmig ausgebildet ist.

9. Vorrichtung nach Anspruch 8,
dadurch gekennzeichnet,
daß das rohrförmige Gehäuse (11) einen Durchmesser von ca. 100 bis ca. 1000 mm und eine Länge von ca. 150 bis 200 mm aufweist.

10. Vorrichtung nach einem der vorangehenden Ansprüche,
dadurch gekennzeichnet,
daß das Gehäuse (11) in der Leitung befestigbar ist.

11. Vorrichtung nach Anspruch 10,
dadurch gekennzeichnet,
daß das Gehäuse (11) in einem vorzugsweise erweiterten Rohrabschnitt mit Anschlußflanschen angeordnet ist.

12. Vorrichtung nach wenigstens einem der vorangehenden Ansprüche,
dadurch gekennzeichnet,
daß in dem Gehäuse (11) mindestens ein ungelochtes Blech (22) eingesetzt ist.

13. Vorrichtung nach Anspruch 12,
dadurch gekennzeichnet,
daß jeweils ein ungelochtes Blech (22) nach einer Gruppe von Lochblechen (14) angeordnet ist.

14. Vorrichtung nach einem der Ansprüche 11 bis 13,
dadurch gekennzeichnet,
daß die ungelochten Bleche (22) parallel zu den Lochblechen (14) angeordnet sind.

15. Vorrichtung nach wenigstens einem der vorangehenden Ansprüche,
dadurch gekennzeichnet,
daß die Bleche (14, 22) parallel zur Achse des Gehäuses (11) ausgerichtet sind.
